# FASCICULE DE BREVET EUROPEEN

(11) **EP 3 247 924 B1**
(45) Date de publication et mention de la délivrance du brevet: **29.07.2020**
(21) Numéro de dépôt: 16703346.3
(22) Date de dépôt: 19.01.2016
(51) Int. Cl.: F16H 57/04, F02C 7/36

(54) **INTÉGRATION D'UNE POMPE EN FÛT DE PIGNON**
INTEGRATION EINER PUMPE AUF EINEM RITZELSCHAFT
INTEGRATION OF A PUMP ON A PINION SHANK

(30) Priorité: 19.01.2015 FR 1550406
(43) Date de publication de la demande: 29.11.2017
(73) Titulaire: Safran Transmission Systems, 92700 Colombes (FR)
(72) Inventeur: MORELLI, Boris, F-75014 Paris (FR); PRUNERA-USACH, Stéphane, CA-H1Y2P4 Montréal, QC (CA)
(74) Mandataire: Regimbeau
(86) Numéro de dépôt international: PCT/FR2016/050098
(87) Numéro de publication internationale: WO 2016/116694

(56) Documents cités:
- EP-A1- 2 063 125
- EP-A1- 2 690 318
- WO-A1-97/40273
- DE-C1- 4 330 226
- GB-A- 1 250 040

## Description

### DOMAINE TECHNIQUE GENERAL

L'invention concerne le domaine de la lubrification d'éléments d'aéronef, en particulier d'éléments positionnés sur la chaine cinématique d'une transmission de puissance, par exemple d'un boitier d'entrainement des accessoires (AGB pour « *Accessory GearBox* » en terminologie anglo-saxonne).

La puissance mécanique nécessaire à l'entraînement des accessoires (aussi appelés « équipements ») est généralement prélevée mécaniquement au niveau d'un groupe propulsif de l'aéronef. Par la suite, des cascades de pignons permettent d'alimenter les différents équipements nécessaires au fonctionnement de l'aéronef : générateur, démarreur, alternateur, pompes hydrauliques, groupe de lubrification, etc.

Les cascades de pignons ainsi que les paliers et roulements permettant la rotation des éléments de la chaîne cinématique nécessitent une lubrification quasi-permanente.

Par exemple, le document GB1250040 décrit un système de lubrification pour l'entrainement des accessoires, dans lequel l'arbre de prélèvement de puissance depuis le compresseur fait office de pompe.

### ETAT DE L'ART

Dans l'état de la technique, ces pignons et roulements sont lubrifiés par une pompe ou un groupe de lubrification alimenté(e) par l'AGB. Des gicleurs aspergent les éléments d'huile qui est ensuite récupérée dans des collecteurs ou des poches situées sur un carter ou un couvercle. Mais une telle lubrification dépend directement du fonctionnement de pompe ou de groupe de lubrification. Ainsi, lorsque le groupe propulsif est arrêté, la lubrification ne se fait plus, sauf résidu d'huile encore présent ou huile perlant depuis le carter sur les pignons.

Or, à l'arrêt, par des effets de « *windmilling* », c'est-à-dire de rotation du groupe propulsif par effet du vent sans que le groupe propulsif ne soit en fonctionnement, les pignons peuvent être amenés à tourner et ont besoin, par conséquence, d'être lubrifiés. Sinon, il existe un risque que les pignons ne s'endommagent (grippage, etc.).

Les effets de « *windmilling* » s'observent aussi en vol, où l'air rentre dans le moteur et l'influence du vent modifient la vitesse de rotation des pâles ou des aubes, pouvant conduire à un manque de lubrification.

### PRESENTATION DE L'INVENTION

Pour pallier les limitations mentionnées ci-dessus, l'invention propose un dispositif de lubrification comprenant les caractéristiques de la revendication 1.

Un tel dispositif constitue une pompe complémentaire aux systèmes traditionnels alimentés par le groupe propulsif de l'aéronef. Il tire pleinement avantage de l'inertie en rotation de certains éléments, lorsque le groupe propulsif est coupé, ainsi que de leur capacité à être mis en mouvement par des effets de mécanique des fluides, à l'arrêt ou en vol, pour pomper de l'huile et offrir ainsi une lubrification des éléments.

L'invention constitue une source complémentaire pour lubrifier les éléments (notamment les pignons) d'une chaine cinématique lorsque l'alimentation en huile de l'aéronef est coupée, empêchant la détérioration des éléments de l'aéronef (grippage, etc.).

Ce mode complémentaire de lubrification à celui traditionnel des groupes de lubrification et/ou pompe, présente un certain nombre d'avantages. Cette source complémentaire de lubrification peut ainsi venir en tant que supplément, s'ajoutant ainsi au groupe de lubrification et/ou pompe traditionnel.

Enfin, en cas de panne ou de dysfonctionnement du système de lubrification traditionnel (fuite, arrêt de la pompe ou du groupe de lubrification, etc.), cette source complémentaire de lubrification peut ainsi venir en tant que suppléant, remplaçant au moins en partie la lubrification qui n'est plus fournie par le groupe de lubrification et/ou pompe traditionnel.

L'invention comprend en outre les caractéristiques suivantes, prises seules ou en combinaison :
- Un premier mode de réalisation, dans lequel :
   - le fût de pignon présente un creux hélicoïdal, et
   - l'arbre forme une vis excentrée de forme complémentaire au creux hélicoïdal,
   la pompe étant de type Moineau,
- Un deuxième mode de réalisation, dans lequel :
   - le fut de pignon a la forme d'un tube cylindrique creux, et
   - l'arbre comprend des spirales sous forme de filetage s'étendant radialement vers le fût de pignon et s'enroulant autour de l'arbre selon une direction parallèle à l'axe de rotation,
   la pompe étant une pompe de type vis à Archimède,
- Un troisième mode de réalisation, dans lequel :
   - le fût de pignon a la forme d'un tube cylindrique à l'intérieur duquel sont disposés des spirales s'étendant radialement vers l'arbre et s'enroulant autour de l'arbre selon une direction parallèle à l'axe de rotation, et
   - l'arbre est cylindrique,
- l'extension radiale des spirales est inférieure à la distance entre le fût et l'arbre,
- le pas des spirales est constant,
- le pas des spirales diminue entre la première extrémité et la seconde extrémité, de sorte à faire augmenter la pression de l'huile pompée,
- la conduite de sortie d'huile libère l'huile sur un poste à lubrifier, par exemple en partie supérieure du pignon,
- la conduite de sortie est reliée à un gicleur qui gicle de l'huile sous pression ou bien fonctionne par gravité en goutte à goutte.

L'invention concerne aussi un ensemble comprenant un dispositif tel que décrit précédemment, et comprenant en outre un carter et/ou un couvercle, le couvercle étant au niveau de l'axe de rotation du dispositif.

L'invention comprend en outre les caractéristiques suivantes, prises seules ou en combinaison :
- le réservoir d'huile est un collecteur ou une poche intégré au carter ou au couvercle,
- Le réservoir est alimenté par écoulement de l'huile dans le carter.

L'invention concerne une unité comprenant un ensemble tel que décrit précédemment, comprenant un outre un groupe propulsif sous forme d'une turbomachine alimentant le système d'entraînement des équipements et permettant l'entrainement en rotation du pignon.

Enfin, l'invention concerne un aéronef comprenant un dispositif, un ensemble ou une unité tel que précédemment décrit.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1, 3, 5 représentent différents modes de réalisation de l'invention, pour trois types de pompes données,
- Les figures 2, 4, 6 représentent des détails respectifs des différents modes de réalisation relatifs au fonctionnement desdites pompes.

### DESCRIPTION DETAILLEE

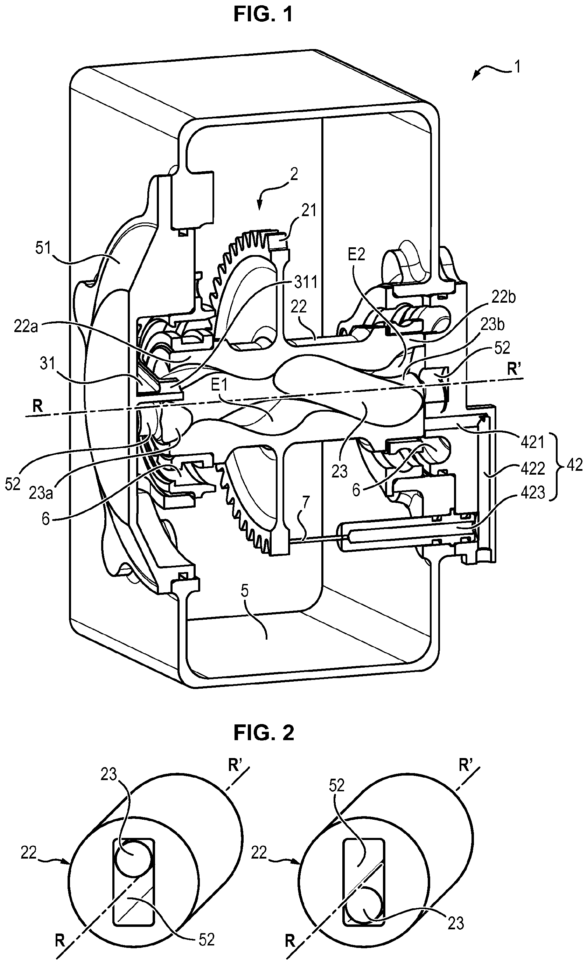

Sur les **figures 1 à 6****,** différents modes de réalisation du dispositif 1 ont été représentés.

Le dispositif 1 comprend un pignon 2, possédant une denture de pignon 21 permettant d'entraîner le pignon 2 en rotation autour d'un axe de rotation R-R'. Par pignon, on désigne toute roue dentée sur un axe de rotation.

La denture de pignon 21 est solidaire, par fixation ou étant venu de matière, avec un fût de pignon creux 22 (désigné comme « fût » par la suite) qui s'étend selon l'axe de rotation R-R'. Un fût de pignon est la partie centrale d'un pignon, au centre de laquelle passe l'axe de rotation, et qui supporte un disque comprenant la denture de pignon.

Le pignon 2 est typiquement positionné sur la chaine de transmission d'effort d'un AGB, c'est-à-dire que ledit pignon 2 entraine par exemple un accessoire (ou équipement) ou constitue un élément intermédiaire lors d'une étape de réduction de rapport ou de transmission. L'AGB est lui-même entrainé par un groupe propulsif de l'aéronef. Ledit groupe propulsif est préférablement une turbomachine.

A l'intérieur du fût de pignon creux 22, un arbre 23 est disposé et s'étend selon l'axe de rotation R-R'. Le fût 22 et l'arbre 23 sont agencés de sorte qu'il existe un espace E entre eux.

Grâce à la rotation du fût 22, l'arbre 23 et le fût 22 forment des moyens de pompage, et coopèrent pour pousser l'huile. L'espace E, comme on le verra par la suite, permet le déplacement d'huile lors du pompage, en profitant de la rotation du fût de pignon.

Au niveau d'une première extrémité 23a de l'arbre 23 et d'une première extrémité 22a du fût 22, en regard de l'espace E, un réservoir d'huile 31 est disposé. Le réservoir d'huile 31 permet d'alimenter l'espace E en huile. Le réservoir d'huile 31 sera détaillé par la suite.

Au niveau d'une seconde extrémité 23b de l'arbre 23 et d'une seconde extrémité 22b de l'arbre 22, en regard de l'espace E toujours, une conduite de sortie d'huile 42 est positionnée pour récupérer l'huile pompée et, éventuellement, mise sous pression.

La conduite de sortie d'huile 42 est préférablement situé en partie inférieur de l'arbre, pour que la gravité favorise l'écoulement.

La conduite de sortie d'huile 42 peut déboucher à divers endroits. Dans un mode de réalisation, la conduite d'huile 42 débouche sur le pignon 2 et permet sa lubrification. Dans d'autres modes de réalisation, la conduite d'huile 42 débouche vers d'autres postes à lubrifier, comme les paliers 6 ou d'autres roulements. La conduite 42 sera détaillée par la suite et différents modes de réalisation seront explicités.

Grâce à la rotation du fût 22, l'arbre 23 et le fût 22, qui forment des moyens de pompage, déplacent l'huile depuis le réservoir d'huile 31 vers la conduite de sortie d'huile 32. Comme mentionné précédemment, ce déplacement peut s'accompagner d'une mise sous pression.

Le dispositif 1 est intégré de façon non limitative dans un carter 5 qui protège les autres éléments de l'aéronef des projections d'huile notamment. En extrémité du dispositif 1 peut se trouver un couvercle 51 solidaire du carter 5, par vissage par exemple. Alternativement, le couvercle 51 peut faire partie de la même pièce que le carter 5. Le pignon 2 (plus précisément le fût 22) et l'arbre 23 sont maintenus en position préférablement grâce au carter 5 et/ou au couvercle 51. Pour cela, des paliers 6 sont prévus en extrémités du dispositif 1, et permettent, tout en supportant le pignon 2, la rotation du dispositif 1. En particulier, la première extrémité 22a du fût 22, située côté réservoir d'huile 31, et la deuxième extrémité 22b du fût 22, située côté conduite de sortie d'huile 42 sont portées par lesdits paliers 6.

Alternativement dans un mode de réalisation en porte-à-faux, seule une extrémité 22a, 22b du fût 22 peut être portée par les paliers 6.

A présent, différents modes de réalisation du système de pompe du dispositif 1 vont être décrits.

### Pompe de type Moineau

Dans ce premier mode de réalisation, le fût de pignon creux 22 et l'arbre 23 forment une pompe de type Moineau (voir **figure 1**).

Le fût de pignon creux 22 a une forme hélicoïdale et l'arbre est un arbre excentré hélicoïdal, ayant une forme complémentaire au creux hélicoïdal du fût 22. Lorsque l'arbre est inséré dans le fût de pignon, l'espace E est comprend une double chaîne de cavités étanches E1, E2 (parfois appelées alvéoles). Lorsque le fût 22 tourne à l'extérieur de l'arbre 23, la forme de l'arbre 23 excentré hélicoïdal coopère avec la forme hélicoïdale du fût de pignon 22 et les alvéoles progressent le long de l'arbre 23 et du fût 22 de la pompe sans changer de forme ni de volume, ce qui transfère l'huile depuis le réservoir d'huile 31 vers le conduit de sortie d'huile 42.

Dans ce mode de réalisation, du fait des cavités étanches E1 et E2 qui se déplacent, le réservoir d'huile 31 comprend typiquement le bec 311 qui déverse dans la partie supérieur de l'espace E.

L'architecture de l'arbre 22 et du fût 21 est faite de sorte que les alvéoles se déplacent du réservoir 31 vers le conduit de sortie 42 lorsque le pignon 2 entraine la pompe.

Dans ce mode de réalisation, à cause de l'excentricité hélicoïdale de l'arbre 23 et de l'entraînement en rotation par le fût 22, les deux extrémités 23a, 23b de l'arbre 23 ont un mouvement de translation rectiligne dans un plan parallèle à l'axe de rotation R-R' (voir **figure 2**). Pour autoriser ce mouvement, le carter 5 et/ou le couvercle 51 peuvent prévoir des encoches 52. Afin d'assurer l'étanchéité au niveau de ces translations dans les encoches 52, des joints d'étanchéités sont positionnés (non représenté sur les figures).

Au niveau de la deuxième extrémité 23b de l'arbre 23, l'huile doit être dirigée vers conduit de sortie d'huile 42. Le carter 5 est préférablement adapté à cette fin.

Le fonctionnement de la pompe est dit volumétrique. Il n'y a pas de mise sous pression, ou seulement sous faible pression.

La pompe délivre des volumes de fluide discontinus.

### Pompe à vis de type Archimède

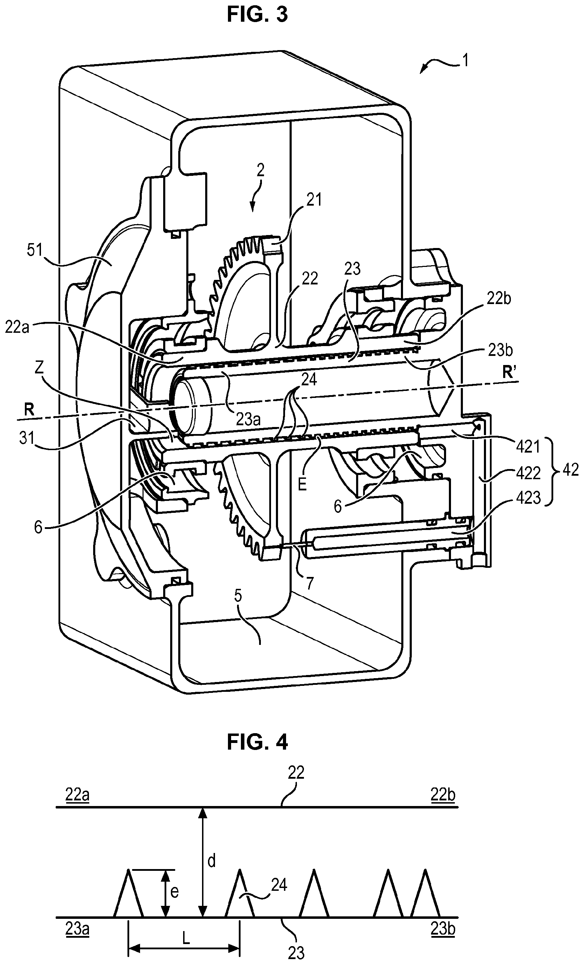

Dans ce deuxième mode de réalisation, le fût de pignon creux 22 et l'arbre 23 forment une pompe à vis de type Archimède (voir **figure 3**). Le fût de pignon creux 22 forme un tube cylindrique et l'arbre 23 est un tube cylindrique centré sur l'axe de rotation R-R'. L'arbre 23 comprend sur sa surface externe des spirales 24 s'étendant radialement en direction du fût 22 et s'enroulant autour de l'arbre 23 selon l'axe de rotation R-R', par exemple sous forme de filetage.

L'arbre 23 est fixe dans le dispositif 1 alors que fût 22 tourne. Pour cela, l'arbre 23 est solidaire au carter 5 ou couvercle 51, soit du côté de la première extrémité 23a, soit du côté de la deuxième extrémité 23b (comme représenté sur la **figure 3**), et le fût 22 est entrainé par la denture de pignon 21. Comparativement à une pompe à vis traditionnelle dans laquelle le fût (le stator) est fixe, et l'arbre (le rotor) est en rotation, la pompe ici est inversée. Néanmoins, le mouvement relatif du fût 22 par rapport à l'arbre 23 reste le même et la pompe fonctionne d'une façon similaire. L'arbre 23 peut être fixé au carter 5 ou être venu de matière avec celui-ci.

Dans ce mode de réalisation, on a typiquement le fût qui se prolonge axialement selon l'axe R-R' davantage que la première extrémité 23a de l'arbre 23, de sorte que le réservoir puisse verser directement dans l'espace E.

Le sens d'enroulement des spirales 24 est choisi de sorte que pour une rotation du pignon 22 donnée, le dispositif agisse bien en tant que pompe depuis réservoir 31 vers la conduite de sortie d'huile 32.

On note « e » l'extension radiale des spirales 24, « d » la distance entre l'arbre 23 et le fût 22, « L » le pas entre deux spirales 24 selon un axe parallèle à l'axe de rotation R-R' (voir **figure 4**).

Selon un premier type de variante préférée, l'extension radiale e est inférieure à la distance d, de sorte qu'il reste un jeu libre au niveau de la surface intérieure du fût 22. Selon un plan normal à l'axe de rotation R-R', l'espace E n'est donc pas scindé en plusieurs parties.

Par la rotation du fût 22 et la force centrifuge, l'huile est plaquée contre la surface intérieure du fût 22. Par conséquent, toute l'huile n'est pas directement entrainée par les spirales 24. Ces dernières contribuent à favoriser le déplacement de l'huile, la viscosité de l'huile permettant ensuite le déplacement par entraînement.

Selon un deuxième type de variante, plusieurs valeurs de pas L peuvent être choisies.

Dans un premier cas, le pas L entre deux spirales 24 est constant.

Dans un deuxième cas, le pas L entre deux spirales 24 diminue lorsque l'on se rapproche du conduit de sortie d'huile 42. La diminution est préférablement progressive tout le long de l'arbre 23 **(****figure 4****).**

Cette diminution permet d'augmentation la pression de l'huile.

### La pompe à vis adaptée

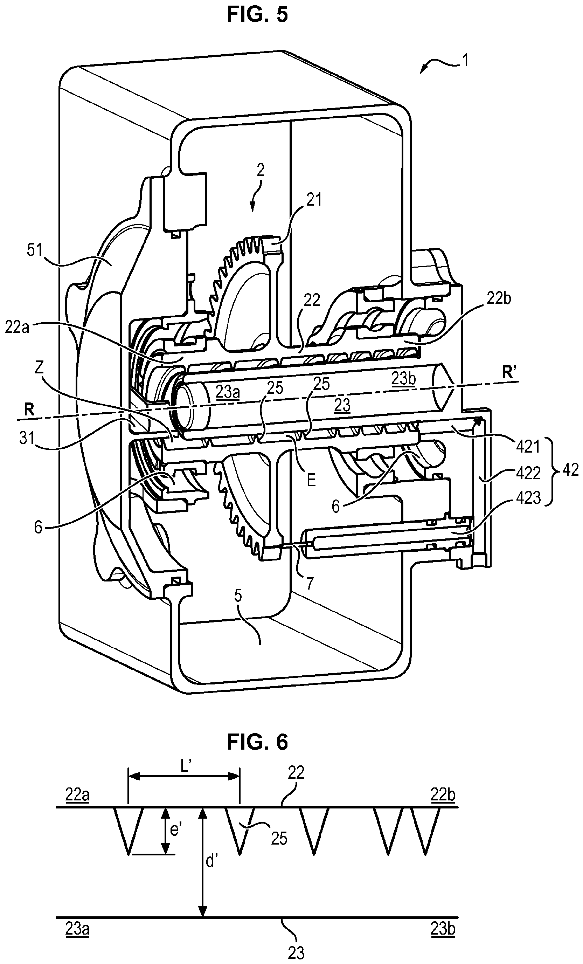

Dans ce troisième mode de réalisation, le fût de pignon creux 22 et l'arbre 23 forment à nouveau une pompe à vis (voir **figure 5**).

Le fût de pignon creux 22 forme un tube cylindrique et l'arbre 23 est un tube cylindrique centré sur l'axe de rotation R-R'. Le fût de pignon creux 22 comprend sur sa surface interne des spirales 25 s'étendant radialement en direction de l'arbre 23 et s'enroulant sur la surface interne du fût 22 selon l'axe de rotation R-R', par exemple sous forme de filetage.

L'arbre 23 est fixe dans le dispositif 1 alors que fût 22 tourne. Pour cela, l'arbre 23 est solidaire au carter 5 ou couvercle 51, et le fût 22 est entrainé par la denture de pignon.

Dans ce mode de réalisation, on a typiquement le fût qui se prolonge axialement selon l'axe R-R' davantage que la première extrémité 23a de l'arbre 23, de sorte que le réservoir puisse verser directement dans l'espace E.

Le sens d'enroulement des spirales 24 est choisi de sorte que pour une rotation du pignon 22 donnée, le dispositif agisse bien en tant que pompe depuis le réservoir 31 vers la conduite de sortie d'huile 32.

On note « e' » l'extension radiale des spirales 24, « d' » la distance entre le fût 22 et l'arbre 23, « L' » le pas entre deux spirales 25 selon un axe parallèle à l'axe de rotation R-R' (voir **figure 6**).

Selon le même premier type de variante préférée, l'extension radiale e' est inférieure à la distance d', de sorte qu'il reste un jeu libre au niveau de l'arbre 23. Selon un plan normal à l'axe de rotation R-R', l'espace E n'est donc pas scindé en plusieurs parties.

Par la rotation du fût 22 et la force centrifuge, l'huile est plaquée contre la surface intérieure du fût 22. Par conséquent, la majorité de l'huile est directement entrainée par les spirales 25. L'huile restante, plus proche de l'arbre 23, est essentiellement entrainée par viscosité.

Selon le même deuxième type de variante, plusieurs valeurs de pas L' peuvent être choisies.

Dans un premier cas, le pas L' entre deux spirales 25 est constant. Dans un deuxième cas, le pas L' entre deux spirales 25 diminue lorsque l'on se rapproche du conduit de sortie d'huile 42. La diminution est préférablement progressive tout le long du fût 22 **(****figure 6****).**

Cette diminution permet d'augmentation la pression de l'huile.

Dans les deux modes de réalisation à vis (de type Archimède et adaptée), le profil des spirales 24, 25 du filetage présenté sur les **figures 4****,** **6** n'est pas limitatif. Celui-ci peut prendre la forme de créneau, ou bien de triangle non-isocèle, c'est-à-dire que la spirale 24, 25 du filetage peut avoir une forme privilégiant un sens d'entrainement de l'huile, notamment en étant incliné en direction de la conduite de sortie d'huile 42.

De plus, par la viscosité de l'huile, les spirales 24, 25 ont essentiellement un rôle d'entraînement global.

A présent, certains éléments du dispositif vont être décrits plus en détail. Ces éléments s'appliquent à tous les modes de réalisation.

Pour que le réservoir 31 puisse verser dans ledit espace E, la première extrémité 22a du fût 22 se prolonge axialement, selon l'axe R-R' et en direction du réservoir d'huile 31, plus loin que la première extrémité 23a de l'arbre 23 de sorte qu'une partie du réservoir 31 pénètre dans le volume défini par le cylindre du fût 22 pour définir une zone de versement Z. En outre, lorsque le dispositif 1 est installé sur un aéronef, le réservoir d'huile 31 est situé au moins en partie plus haut que l'espace E défini entre l'arbre 23 et le fût 22, de sorte à pouvoir verser par gravité dans ledit espace E.

Alternativement, l'arbre 23 et le fût 22 peuvent avoir des longueurs similaires au niveau de la zone de versement Z, c'est-à-dire que les premières extrémités 22a, 23a du fût 22 et de l'arbre 23 se terminent sensiblement au même niveau. Dans ce cas, le réservoir d'huile 31 peut comprendre un bec 311 qui pénètre dans l'espace E entre le fût 22 et l'arbre 23. Préférablement le bec 311 déverse dans la partie supérieure de l'espace E.

Le réservoir d'huile 31 est typiquement sous la forme d'une poche ou d'un collecteur. Le réservoir d'huile 31 est avantageusement intégré au carter 5 ou au couvercle 51.

L'alimentation du réservoir d'huile 31 peut être effectuée par ruissèlement de l'huile à l'intérieur du carter 5. En effet, la lubrification du pignon 2 entraîne par force centrifuge des projections d'huile sur les parois du carter 5. Les gouttes d'huile ainsi projetées ruissellent le long de la paroi et sont récupérées au niveau du collecteur formant le réservoir d'huile 31.

Alternativement, il est possible de prévoir une alimentation spécifique du réservoir d'huile 31, par exemple à l'aide d'un gicleur dédié. Le réservoir d'huile 31 est préférablement dimensionné pour contenir une quantité suffisante d'huile pour permettre de continuer la lubrification lorsque le groupe propulsif est arrêté.

Plus généralement, le réservoir 31 peut être remplacé par une alimentation en huile. Néanmoins, il est préférable de disposer d'un stock d'huile.

Le conduit de sortie d'huile 42 peut faire partie du carter 5. On peut distinguer deux modes principaux d'utilisation du conduit de sortie d'huile 42. D'une façon générale, le conduit d'huile 42 peut comprendre une partie de récupération 421, une partie de transmission 422 et une partie de versement 423.

La partie de récupération 421 est préférablement situé en vis-à-vis de la deuxième extrémité 22b du fût 22, sensiblement au même niveau, et en partie inférieure du fût 22 pour profiter de l'écoulement gravitaire.

Un système de joint (non représenté) est prévu dans la jonction pour limiter les fuites.

Dans un premier mode de réalisation, la partie de transmission 422 remonte l'huile au en partie supérieure du pignon et y déverse l'huile, en goutte à goutte, afin de lubrifier le pignon 2 par écoulement gravitaire. Il n'est ainsi pas nécessaire de monter l'huile sous pression de façon très importante : il suffit de vaincre la pression hydrostatique de la partie de transmission 422. Le premier mode de réalisation est préférablement utilisé pour le mode de réalisation avec une pompe de type Moineau. Dans un second mode de réalisation, lorsque l'huile est sous pression, la partie de versement 423 peut comprendre un gicleur 7 qui asperge le pignon 2 d'huile. L'aspergement se fait typiquement en partie basse du pignon 2.

Le second mode de réalisation peut être utilisé lorsque l'huile est mise sous pression par la pompe comme dans certaines variantes des pompes à vis.

Le conduit de sortie d'huile 42 peut aussi contribuer à lubrifier les paliers 6 ou tout autre palier présent dans l'AGB, plus généralement tout poste nécessitant une lubrification.

Alternativement, le conduit de sortie d'huile 42 peut traverser le carter 5 pour lubrifier d'autres éléments de l'AGB.

Par l'architecture du système et les niveaux de pression impliqués, l'invention est particulièrement pertinente pour une lubrification locale, c'est-à-dire à proximité du pignon 2. Par proximité, on entend une distance telle que le dispositif 1 puisse transporter de l'huile sur toute cette distance. Selon un mode avantageux de l'invention, il s'agit même d'une autolubrification, puisque le pignon 2 alimente le dispositif 1 qui le lubrifie.

Quel que soit l'élément lubrifié, la lubrification peut se faire soit par un versement goutte à goutte, soit par une projection d'huile sous pression (à l'aide d'un gicleur par exemple).

L'invention s'applique à tout dimensionnement de pignon 2. En effet, le principe de pompe intégrée au fût d'un pignon creux 22 peut se généraliser sur toute taille de diamètre de fût 22 et d'arbre 23. Similairement, le dimensionnement des éléments composant la pompe (diamètre de l'arbre, nombre de spirales, etc.) peut être adapté en fonction des besoins.

Dans un système d'entrainement des accessoires, plusieurs dispositifs 1 sont prévus et s'engrènent les uns les autres.

En particulier, le dispositif 1 permet de transmettre des efforts et/ou de réduire un rapport pour alimenter un accessoire.

## Revendications

1. Dispositif (1) de lubrification d'éléments d'un système d'entraînement des accessoires d'un aéronef, comprenant un pignon (2) présentant un fût de pignon (22) qui est creux et qui a un axe de rotation (R-R'), ledit dispositif (1) comprend :
• Un arbre (23), disposé à l'intérieur du fût de pignon (22) et s'étendant selon l'axe de rotation (R-R'), ledit dispositif (1) étant **caractérisé en ce qu'**il comprend en outre :
• Un espace (E) entre l'arbre (23) et le fût de pignon (22), permettant le déplacement de l'huile,
• Un réservoir d'huile (31), disposé en regard dudit espace (E), au niveau d'une première extrémité (22a) du fût de pignon (22),
• Une conduite de sortie d'huile (42, 421), disposée en regard de l'espace (E), au niveau d'une deuxième extrémité (22b) du fût de pignon (22),
dans lequel le fût de pignon (22) et l'arbre (23) sont agencés de façon à former ensemble une pompe adaptée pour pousser de l'huile depuis le réservoir (31) vers la conduite de sortie d'huile (42, 421), lors de la rotation du fût de pignon (22) autour de l'arbre (23),
la conduite de sortie d'huile débouchant sur le pignon (2) permettant sa lubrification.

2. Dispositif selon la revendication 1, dans lequel :
• le fût de pignon (22) présente un creux hélicoïdal, et
• l'arbre (23) forme une vis excentrée de forme complémentaire au creux hélicoïdal,
la pompe étant de type Moineau.

3. Dispositif selon la revendication 1, dans lequel:
• le fut de pignon (22) a la forme d'un tube cylindrique creux, et
• l'arbre (23) comprend des spirales (24) sous forme de filetage s'étendant radialement vers le fût de pignon (22) et s'enroulant autour de l'arbre (23) selon une direction parallèle à l'axe de rotation (R-R'),
la pompe étant une pompe de type vis à Archimède.

4. Dispositif selon la revendication 1, dans lequel :
• le fût de pignon (22) a la forme d'un tube cylindrique à l'intérieur duquel sont disposés des spirales (25) s'étendant radialement vers l'arbre (23) et s'enroulant autour de l'arbre (23) selon une direction parallèle à l'axe de rotation (R-R'), et
• l'arbre (23) est cylindrique.

5. Dispositif selon l'une quelconque des revendications 3 à 4, dans lequel l'extension radiale (e, e') des spirales (24, 25) est inférieure à la distance (d, d') entre le fût (22) et l'arbre (23).

6. Dispositif selon l'une quelconque des revendications 4 à 5, dans lequel le pas (L, L') des spirales (24, 25) est constant.

7. Dispositif selon l'une quelconque des revendications 3 à 6, dans lequel le pas (L, L') des spirales (24, 25) diminue entre la première extrémité (22a, 23b) et la seconde extrémité (22b, 23b), de sorte à faire augmenter la pression de l'huile pompée.

8. Dispositif selon l'une quelconque des revendications 1 à 7, dans lequel la conduite de sortie d'huile (42, 423) libère l'huile sur un poste à lubrifier, par exemple en partie supérieure du pignon (2).

9. Dispositif selon l'une quelconque des revendications 1 à 8, dans lequel la conduite de sortie (42, 421) est reliée à un gicleur (7) qui gicle de l'huile sous pression ou bien fonctionne par gravité en goutte à goutte.

10. Ensemble comprenant un dispositif (1) selon l'une quelconque des revendications 1 à 9, et comprenant en outre un carter (5) et/ou un couvercle (51), le couvercle étant au niveau de l'axe de rotation du dispositif (R-R').

11. Ensemble selon la revendication 10, dans lequel le réservoir d'huile (31) est un collecteur ou une poche intégré au carter (5) ou au couvercle (51).

12. Ensemble selon la revendication 10 ou 11, dans lequel le réservoir (31) est alimenté par écoulement de l'huile dans le carter (5).

13. Unité comprenant un ensemble selon l'une des revendications 10 à 12, comprenant un outre un groupe propulsif sous forme d'une turbomachine alimentant le système d'entraînement des équipements et permettant l'entrainement en rotation du pignon (2).

14. Aéronef comprenant un dispositif, un ensemble ou une unité selon l'une quelconque des revendications 1 à 13.

## Patentansprüche

1. Vorrichtung (1) zur Schmierung von Elementen eines Systems zum Antrieb der Zusatzausrüstungen eines Luftfahrzeugs, die ein Ritzel (2) umfasst, das einen Ritzelschaft (22) aufweist, der hohl ist und der eine Drehachse (R-R') aufweist, wobei die Vorrichtung (1) umfasst:
• eine Welle (23), die im Inneren des Ritzelschafts (22) angeordnet ist und sich entlang der Drehachse (R-R') erstreckt, wobei die Vorrichtung (1) **dadurch gekennzeichnet ist, dass** sie ferner umfasst:
• einen Raum (E) zwischen der Welle (23) und dem Ritzelschaft (22), der die Verlagerung des Öls ermöglicht,
• einen Ölbehälter (31), der dem Raum (E) gegenüberliegend im Bereich eines ersten Endes (22a) des Ritzelschafts (22) angeordnet ist,
• eine Ölausgangsleitung (42, 421), die dem Raum (E) im Bereich eines zweiten Endes (22b) des Ritzelschafts (22) gegenüberliegend angeordnet ist,
wobei der Ritzelschaft (22) und die Welle (23) derart eingerichtet sind, dass sie zusammen eine Pumpe bilden, die geeignet ist, bei der Drehung des Ritzelschafts (22) um die Welle (23) Öl von dem Behälter (31) hin zu der Ölausgangsleitung (42, 421) zu drücken,
die Ölausgangsleitung in das Ritzel (2) mündet, wodurch seine Schmierung ermöglicht wird.

2. Vorrichtung nach Anspruch 1, wobei:
• der Ritzelschaft (22) einen schraubenförmigen Hohlraum aufweist, und
• die Welle (23) eine exzentrische Schraube bildet, deren Form sich mit dem schraubenförmigen Hohlraum ergänzt,
wobei die Pumpe vom Exzenterschneckentyp ist.

3. Vorrichtung nach Anspruch 1, wobei:
• der Ritzelschaft (22) die Form eines hohlen zylindrischen Rohres aufweist, und
• die Welle (23) Spiralen (24) in Gewindeform umfasst, die sich radial hin zu dem Ritzelschaft (22) erstrecken und sich entlang einer Richtung parallel zu der Drehachse (R-R') spiralförmig um die Welle (23) drehen,
wobei die Pumpe vom Typ archimedische Schraube ist.

4. Vorrichtung nach Anspruch 1, wobei:
• der Ritzelschaft (22) die Form eines zylindrischen Rohres aufweist, in dessen Inneren Spiralen (25) angeordnet sind, die sich radial hin zu der Welle (23) erstrecken und sich entlang einer Richtung parallel zur Drehachse (R-R') spiralförmig um die Welle (23) drehen, und
• die Welle (23) zylindrisch ist.

5. Vorrichtung nach einem der Ansprüche 3 bis 4, wobei die radiale Ausdehnung (e, e') der Spiralen (24, 25) kleiner als der Abstand (d, d') zwischen dem Schaft (22) und der Welle (23) ist.

6. Vorrichtung nach einem der Ansprüche 4 bis 5, wobei die Steigung (L, L') der Spiralen (24, 25) konstant ist.

7. Vorrichtung nach einem der Ansprüche 3 bis 6, wobei die Steigung (L, L') der Spiralen (24, 25) zwischen dem ersten Ende (22a, 23b) und dem zweiten Ende (22b, 23b) abnimmt, derart dass der Druck des gepumpten Öls erhöht wird.

8. Vorrichtung nach einem der Ansprüche 1 bis 7, wobei die Ölausgangsleitung (42, 423) das Öl an einer zu schmierenden Stelle, zum Beispiel am oberen Teil des Ritzels (2), freisetzt.

9. Vorrichtung nach einem der Ansprüche 1 bis 8, wobei die Ausgangsleitung (42, 421) mit einer Spritzdüse (7) verbunden ist, die das Öl unter Druck spritzt oder durch Schwerkraft tropfenweise funktioniert.

10. Baugruppe, die eine Vorrichtung (1) nach einem der Ansprüche 1 bis 9 umfasst und ferner ein Gehäuse (5) und/oder einen Deckel (51) umfasst, wobei der Deckel sich im Bereich der Drehachse der Vorrichtung (R-R') befindet.

11. Baugruppe nach Anspruch 10, wobei der Ölbehälter (31) ein Sammler oder eine Tasche ist, die in das Gehäuse (5) oder in den Deckel (51) integriert ist.

12. Baugruppe nach Anspruch 10 oder 11, wobei der Behälter (31) durch Fließen des Öls in dem Gehäuse (5) versorgt wird.

13. Einheit, die eine Baugruppe nach einem der Ansprüche 10 bis 12 umfasst, die ferner ein Triebwerk in der Form einer Turbomaschine umfasst, das das Antriebssystem der Ausrüstungen versorgt und den drehbaren Antrieb des Ritzels (2) ermöglicht.

14. Luftfahrzeug, das eine Vorrichtung, eine Baugruppe oder eine Einheit nach einem der Ansprüche 1 bis 13 umfasst.

## Claims

1. A device (1) for lubricating elements of an accessory drive system for an aircraft, comprising a pinion (2) having a pinion shank (22) which is hollow and which has an axis of rotation (R-R'), said device (1) comprises:
• A shaft (23), disposed inside the pinion shank (22) and extending along the axis of rotation (R-R'), said device (1) being **characterized in that** it further comprises:
• A space (E) between the shaft (23) and the pinion shank (22), allowing the displacement of the oil,
• An oil tank (31), disposed opposite said space (E), at a first end (22a) of the pinion shank (22),
• An oil outlet line (42, 421), disposed opposite the space (E), at a second end (22b) of the pinion shank (22),
wherein the pinion shank (22) and the shaft (23) are arranged so as to form together a pump adapted to push oil from the tank (31) to the oil outlet line (42, 421), upon rotation of the pinion shank (22) around the shaft (23),
the oil outlet line opening out on the pinion (2) allowing its lubrication.

2. The device according to claim 1, wherein:
• the pinion shank (22) has a helical recess, and
• the shaft (23) forms an eccentric screw of a shape complementary to the helical recess,
the pump being of the Moineau type.

3. The device according to claim 1, wherein:
• the pinion shank (22) has the shape of a hollow cylindrical tube, and
• the shaft (23) comprises spirals (24) in the form of thread extending radially towards the pinion shank (22) and winding around the shaft (23) along a direction parallel to the axis of rotation (R-R'),
the pump being an Archimedes screw-type pump.

4. The device according to claim 1, wherein:
• the pinion shank (22) has the shape of a cylindrical tube inside which are disposed spirals (25) extending radially towards the shaft (23) and winding around the shaft (23) along a direction parallel to the axis of rotation (R-R'), and
• the shaft (23) is cylindrical.

5. The device according to any one of claims 3 to 4, wherein the radial extension (e, e') of the spirals (24, 25) is smaller than the distance (d, d') between the shank (22) and the shaft (23).

6. The device according to any one of claims 4 to 5, wherein the pitch (L, L') of the spirals (24, 25) is constant.

7. The device according to any one of claims 3 to 6, wherein the pitch (L, L') of the spirals (24, 25) decreases between the first end (22a, 23b) and the second end (22b, 23b), so as to increase the pressure of the pumped oil.

8. The device according to any one of claims 1 to 7, wherein the oil outlet line (42, 423) releases the oil onto a station to be lubricated, for example in the upper part of the pinion (2).

9. The device according to any one of claims 1 to 8, wherein the outlet line (42, 421) is connected to a nozzle (7) which splashes pressurized oil or operates by gravity on a drip manner.

10. An assembly comprising a device (1) according to any one of claims 1 to 9, and further comprising a casing (5) and/or a cover (51), the cover being at the axis of rotation of the device (R-R').

11. The assembly according to claim 10, wherein the oil tank (31) is a collector or bag integrated into the casing (5) or into the cover (51).

12. The assembly according to claim 10 or 11, wherein the tank (31) is supplied by flowing oil into the casing (5).

13. A unit comprising an assembly according to any of claims 10 to 12, further comprising a propulsion unit in the form of a turbomachine supplying the equipment drive system and allowing driving the pinion (2) in rotation.

14. An aircraft comprising a device, an assembly or a unit according to any one of claims 1 to 13.
